# FASCICULE DE BREVET EUROPEEN

(11) **EP 3 159 590 B1**
(45) Date de publication et mention de la délivrance du brevet: **12.09.2018**
(21) Numéro de dépôt: 16192235.6
(22) Date de dépôt: 04.10.2016
(51) Int. Cl.: F16L 13/14, F16L 33/207

(54) **DISPOSITIF DE VISUALISATION DE SERTISSAGE POUR UN RACCORD À SERTIR**
VORRICHTUNG ZUM ANZEIGEN EINES CRIMPVERFAHRENS FÜR EINEN ZU CRIMPENDEN ANSCHLUSS
DEVICE FOR VIEWING CRIMPING FOR A COUPLING TO BE CRIMPED

(30) Priorité: 19.10.2015 FR 1559931
(43) Date de publication de la demande: 26.04.2017
(73) Titulaire: COMAP, 69008 Lyon (FR)
(72) Inventeur: LE CLINCHE, Pascal, 45400 FLEURY LES AUBRAIS (FR)
(74) Mandataire: Verriest, Philippe

(56) Documents cités:
- EP-A1- 1 538 383
- EP-A1- 1 596 116
- EP-A1- 1 790 896

## Description

La présente invention concerne un dispositif de visualisation de sertissage pour un raccord à sertir pour tubes.

Pour raccorder deux tubes, il est connu d'utiliser un raccord à sertir comprenant deux embouts de raccordement destinés chacun à être raccordés à l'un des deux tubes, et deux douilles de sertissage destinées chacune à s'étendre autour de l'un des deux tubes. L'étanchéité à l'intérieur de chaque tube est assurée par l'intermédiaire d'un ou de plusieurs joints d'étanchéité disposé(s) sur chaque embout de raccordement.

Lors de l'installation d'une portion de réseau de tubes, l'installateur réalise une phase d'assemblage d'une pluralité de tubes à l'aide d'une pluralité de raccords à sertir, puis une phase de sertissage au cours de laquelle chaque raccord est serti sur les portions d'extrémité des tubes respectifs afin de garantir la tenue mécanique durable de l'installation et son étanchéité.

Cependant, afin de garantir l'étanchéité durable de l'installation, il est nécessaire de sertir tous les raccords. Diverses solutions ont été envisagées pour permettre à l'utilisateur de vérifier que tous les raccords ont été sertis.

Une solution connue consiste à prévoir une bague de visualisation de sertissage autour de chaque douille de sertissage du raccord à sertir, chaque bague de visualisation de sertissage étant destinée à être déformée lors d'une opération de sertissage du raccord au niveau de la douille de sertissage respective. Un tel raccord est notamment décrit dans le document EP1596116.

La présence de telles bagues de visualisation de sertissage sur un raccord à sertir permet à un utilisateur de visualiser le sertissage de chaque raccord simplement par la constatation de la déformation de chaque bague de visualisation de sertissage sur chaque raccord.

Cependant, une telle constatation peut s'avérer malaisée notamment lorsque les raccords sont disposés dans des espaces confinés et sombres.

Il convient également d'être noté que la portion d'extrémité de chaque douille de sertissage tournée vers le corps du raccord présente généralement un diamètre rétréci de manière à coopérer avec une rainure extérieure annulaire prévu sur le corps du raccord, et ainsi permettre le maintien en position de la douille de sertissage par rapport au corps du raccord.

Toutefois, un tel assemblage de la douille de sertissage sur le corps du raccord peut s'avérer complexe du fait notamment de la rigidité du corps de raccord et de la douille de sertissage.

La présente invention vise à remédier à ces inconvénients.

Le problème technique à la base de l'invention consiste donc à fournir un dispositif de visualisation de sertissage qui soit de structure simple et économique, tout en permettant un assemblage aisé du raccord à sertir et une visualisation aisée et fiable du sertissage du raccord.

A cet effet, la présente invention concerne un dispositif de visualisation de sertissage selon la revendication 1.

Une telle configuration du dispositif de visualisation de sertissage, et notamment sa réalisation à partir de deux bagues distinctes, permet un assemblage aisé de la douille de sertissage sur le corps de raccord par l'intermédiaire de la bague de fixation qui peut, contrairement à la douille de sertissage, être réalisée en matériau approprié, par exemple en matière plastique, pour faciliter sa fixation sur le corps de raccord, et une visualisation aisée et fiable du sertissage du raccord simplement par la constatation de la destruction de la bague de visualisation et son absence sur le raccord.

Le dispositif de visualisation de sertissage peut en outre présenter une ou plusieurs des caractéristiques suivantes, prises seules ou en combinaison.

Selon un mode de réalisation de l'invention, la partie d'assemblage est annulaire.

Selon un mode de réalisation de l'invention, l'au moins un segment de montage est configuré pour être monté sur la partie d'assemblage.

Selon un mode de réalisation de l'invention, l'au moins un segment de montage comporte un élément de fixation configuré pour coopérer avec un élément de fixation complémentaire prévu sur la bague de fixation, et par exemple sur la partie d'assemblage. L'élément de fixation complémentaire est par exemple ménagé sur une surface extérieure de la partie d'assemblage, et l'élément de fixation est par exemple ménagé sur une surface intérieure de l'au moins un segment de montage.

Selon un mode de réalisation de l'invention, l'élément de fixation complémentaire est ménagé sur la circonférence extérieure de la partie d'assemblage.

Selon un mode de réalisation de l'invention, l'élément de fixation prévu sur l'au moins un segment de montage est une nervure d'encliquetage, et l'élément de fixation complémentaire prévu sur la bague de fixation est une rainure d'encliquetage annulaire.

Selon un mode de réalisation de l'invention, l'au moins un segment de montage comporte un logement de réception configuré pour recevoir une portion d'insertion prévue sur la bague de fixation, et par exemple sur la partie d'assemblage.

Selon un mode de réalisation de l'invention, la portion d'insertion est orientée à l'opposé de la partie de fixation. La portion d'insertion est par exemple prévue sur un bord d'extrémité de la partie d'assemblage opposé à la partie de fixation, et plus particulièrement sur un bord d'extrémité de la bague de fixation opposé à la partie de fixation. La portion d'insertion prévue sur la bague de fixation peut par exemple être une nervure d'insertion. Selon un mode de réalisation de l'invention, la portion d'insertion s'étend sensiblement parallèlement à l'axe de la bague de fixation.

Selon un mode de réalisation de l'invention, le logement de réception est en arc de cercle.

Selon un mode de réalisation de l'invention, l'anneau de retenue comporte au moins deux segments de retenue reliés par des ponts de matière ruptibles. Ces dispositions assurent un retrait aisé de l'anneau de retenue après la rupture des différents ponts de matière lors d'une opération de sertissage.

Selon un mode de réalisation de l'invention, chaque segment de retenue présente une forme générale en arc de cercle.

Selon un mode de réalisation de l'invention, l'au moins un élément de liaison s'étend sensiblement parallèlement à l'axe de la bague de visualisation.

Selon un mode de réalisation de l'invention, la partie de retenue comporte une pluralité d'éléments de liaison décalés angulairement les uns des autres.

Selon un mode de réalisation de l'invention, l'au moins un segment de montage présente une forme générale en arc de cercle.

Selon un mode de réalisation de l'invention, la partie de montage comporte une pluralité de segments de montage s'étendant successivement et circonférentiellement autour de l'axe de la bague de visualisation, de telle sorte qu'un écart angulaire est ménagé entre chaque paire de segments de montage adjacents.

Selon un mode de réalisation de l'invention, chaque segment de montage est relié à la partie de retenue par deux ponts de matière situés respectivement aux deux extrémités du segment de montage respectif.

Selon un mode de réalisation de l'invention, chaque élément de liaison s'étend sensiblement en regard d'un écart angulaire entre deux segments de montage adjacents.

Selon un mode de réalisation de l'invention, chaque élément de liaison est relié à une paire de segments de montage adjacents. Par exemple, chaque élément de liaison est relié d'une part à une extrémité d'un premier segment de montage de la paire respective, et d'autre part à une extrémité d'un deuxième segment de montage de la paire respective.

Selon un mode de réalisation de l'invention, les segments de montage de chaque paire de segments de montage adjacents sont reliés l'un à l'autre par un pont de matière ruptible s'étendant avantageusement entre les deux extrémités adjacentes des deux segments de montage de ladite paire. Avantageusement, chaque pont de matière ruptible reliant deux segments de montage adjacents est disposé à proximité de l'élément de liaison respectif.

Selon un mode de réalisation de l'invention, la bague de fixation comporte un élément d'indexation angulaire configuré pour coopérer avec la bague de visualisation de manière à définir au moins une position de montage de la bague de visualisation sur la bague de fixation.

Selon un mode de réalisation de l'invention, la bague de visualisation est rigide ou semi-rigide. La bague de visualisation peut être réalisée en matière synthétique, par exemple en polypropylène, et notamment en polypropylène chargé par exemple d'une charge minérale.

Selon un mode de réalisation de l'invention, la bague de fixation est élastiquement déformable. La bague de fixation peut être réalisée en matière synthétique, par exemple en polypropylène, et notamment en polypropylène copolymère.

Selon un mode de réalisation de l'invention, la partie de fixation est annulaire.

Selon un mode de réalisation de l'invention, la partie de fixation comporte au moins un élément de fixation destiné à coopérer avec un élément de fixation complémentaire prévu sur le corps de raccord. L'au moins un élément de fixation est par exemple ménagé sur une surface intérieure de la partie de fixation.

Selon un mode de réalisation de l'invention, l'au moins un élément de fixation prévu sur la partie de fixation est une nervure d'encliquetage, et l'élément de fixation complémentaire prévu sur le corps de raccord est une rainure d'encliquetage annulaire.

Selon un mode de réalisation de l'invention, la partie de fixation comporte une pluralité d'élément de fixation répartis sur la circonférence intérieure de la partie de fixation.

Selon un mode de réalisation de l'invention, la bague de fixation comporte une partie d'isolation galvanique annulaire destinée à prendre appui contre une surface d'appui du corps de raccord.

Selon un mode de réalisation de l'invention, la partie d'assemblage comporte une pluralité d'ouvertures d'assemblage à travers chacune desquelles est destinée à s'étendre une portion d'assemblage respective prévue sur la douille de sertissage.

Selon un mode de réalisation de l'invention, chaque ouverture d'assemblage est en arc de cercle.

Selon un mode de réalisation de l'invention, la partie d'assemblage comporte des portions de guidage configurées pour coopérer avec et guider les portions d'assemblage prévues sur la douille de sertissage lors de l'assemblage de la douille de sertissage et de la bague de fixation.

Selon un mode de réalisation de l'invention, la partie d'assemblage comporte une pluralité de surfaces de butée configurées pour empêcher, en conditions d'utilisation, un retrait des portions d'assemblage prévues sur la douille de sertissage hors des ouvertures d'assemblage.

Selon un mode de réalisation de l'invention, la bague de fixation et la bague de visualisation sont de couleurs différentes, et par exemple de couleurs contrastées. Selon un mode de réalisation de l'invention, la bague de fixation est de couleur claire, et la bague de visualisation est de couleur vive. Par exemple, la bague de fixation peut être blanche, et la bague de visualisation peut être rouge, verte ou jaune.

La présente invention concerne en outre un raccord à sertir pour tubes, comportant :
- un corps de raccord comportant au moins un embout de raccordement destiné à être logé à l'intérieur d'un tube,
- une douille de sertissage destinée à s'étendre autour du tube, et
- un dispositif de visualisation de sertissage selon l'invention.

Selon un mode de réalisation de l'invention, la douille de sertissage comporte une pluralité d'encoches débouchant sur un bord d'extrémité de la douille de sertissage de manière à former une pluralité de portions d'assemblage configurées pour être assemblées à la partie d'assemblage, et par exemple pour s'étendre à travers les ouverture d'assemblage prévues sur la partie d'assemblage.

Selon un mode de réalisation de l'invention, chaque portion d'assemblage comporte au moins un élément de retenue configuré pour coopérer avec la partie d'assemblage de la bague de fixation de manière à empêcher un désassemblage de la douille de sertissage et de la bague de fixation. Par exemple, l'au moins un élément de retenue prévu sur chaque portion d'assemblage est configuré pour coopérer avec la partie d'assemblage de la bague de fixation de manière à empêcher un retrait de la portion d'assemblage respective hors de l'ouverture d'assemblage respective.

Selon un mode de réalisation de l'invention, la douille de sertissage comporte au moins une fenêtre de visualisation de tube destinée à permettre, en conditions d'utilisation, la visualisation du tube dans lequel est logé l'embout de raccordement. L'au moins une fenêtre de visualisation de tube est configurée pour être située, en conditions d'utilisation, au niveau de l'au moins un embout de raccordement. Avantageusement, la douille de sertissage comporte une pluralité de fenêtres de visualisation de tube. Chaque fenêtre de visualisation de tube peut par exemple déboucher dans une encoche respective.

Avantageusement, l'élément d'indexation est configurer pour définir une position de montage de la bague de fixation sur la bague de visualisation dans laquelle l'au moins un élément de liaison libère l'au moins une fenêtre de visualisation de tube, et en d'autres termes ne recouvre pas l'au moins une fenêtre de visualisation de tube.

Selon un mode de réalisation de l'invention, le corps de raccord comporte une surface d'appui contre laquelle prend appui la partie d'isolation galvanique.

Selon un mode de réalisation de l'invention, la bague de visualisation est destinée à être détruite lors du sertissage du raccord à sertir.

Selon un mode de réalisation de l'invention, la partie de montage de la bague de visualisation présente un diamètre extérieur supérieur au diamètre extérieur de l'anneau de retenue.

Selon un mode de réalisation de l'invention, le corps de raccord comporte au moins deux embouts de raccordement, et le raccord à sertir comporte au moins deux douilles de sertissage et deux dispositifs de visualisation.

Selon un mode de réalisation de l'invention, le corps de raccord comporte trois embouts de raccordement, et le raccord à sertir comporte trois douilles de sertissage et trois dispositifs de visualisation.

De toute façon l'invention sera bien comprise à l'aide de la description qui suit en référence au dessin schématique annexé représentant, à titre d'exemples non limitatifs, deux formes d'exécution de ce raccord à sertir.
Figure 1 est une vue en perspective d'un raccord à sertir selon un premier mode de réalisation de l'invention.
Figure 2 est une vue partielle en coupe du raccord à sertir de la figure 1.
Figure 3 est une vue en perspective d'un dispositif de visualisation de sertissage appartenant au raccord à sertir de la figure 1.
Figure 4 est une vue en perspective d'une bague de fixation appartenant au dispositif de visualisation de la figure 3.
Figure 5 est une vue en perspective d'une bague de visualisation appartenant au dispositif de visualisation de la figure 3.
Figure 6 est une vue en perspective d'une douille de sertissage appartenant au raccord à sertir de la figure 1.
Figure 7 est une vue en coupe de la douille de sertissage de la figure 6 assemblée au dispositif de visualisation de la figure 3.
Figure 8 est une vue de côté du raccord à sertir de la figure 1 en cours de sertissage.
Figure 9 est une vue de côté du raccord à sertir de la figure 1 après sertissage au niveau d'une première douille de sertissage.
Figure 10 est une vue en perspective du raccord à sertir de la figure 1 après sertissage.
Figure 11 est une vue en perspective d'un raccord à sertir selon un deuxième mode de réalisation de l'invention.

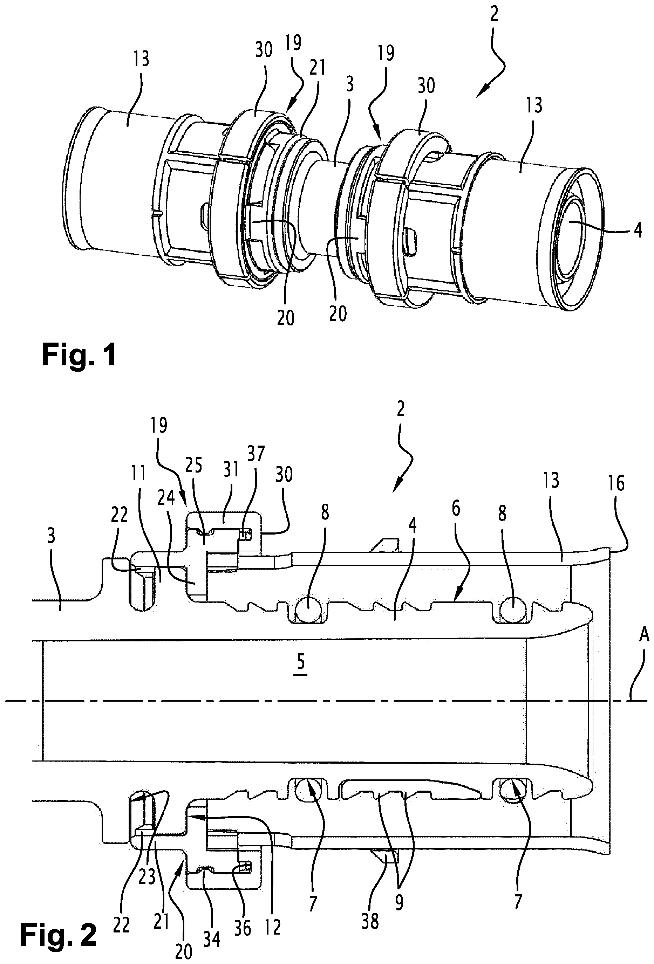

Les figures 1 à 10 représentent un raccord à sertir 2 comprenant un corps de raccord 3 comportant deux embouts de raccordement 4. Chaque embout de raccordement 4 est destiné chacun à être logé à l'intérieur d'une portion d'extrémité d'un tube respectif. Chaque embout de raccordement 4 comporte un passage interne 5 permettant l'écoulement d'un fluide contenu dans le tube respectif. Chaque embout de raccordement 4 comporte également, sur sa surface extérieure 6, deux rainures annulaires 7 destinées à loger chacune un joint d'étanchéité 8, et une pluralité de crans 9 destinés à coopérer avec la paroi intérieure du tube respectif de manière à empêcher la sortie de l'embout de raccordement 4 hors du tube respectif.

Le corps de raccord 3 comporte également deux rebords d'appui 11 destinés chacun à rester hors du tube respectif, et associés chacun à l'un des embouts de raccordement 4. Chaque rebord d'appui 11 comporte une surface d'appui 12 s'étendant sensiblement radialement par rapport à l'axe A du corps de raccord 3.

Selon un mode de réalisation de l'invention, le corps de raccord 3 peut être réalisé par exemple en laiton ou en matière thermoplastique.

Le raccord à sertir 2 comporte également deux douilles de sertissage 13 destinées chacune à s'étendre autour d'un tube et d'un embout d'écoulement 4 respectifs. Chaque douille de sertissage 13 est de forme générale cylindrique, et peut par exemple être réalisée en acier inoxydable.

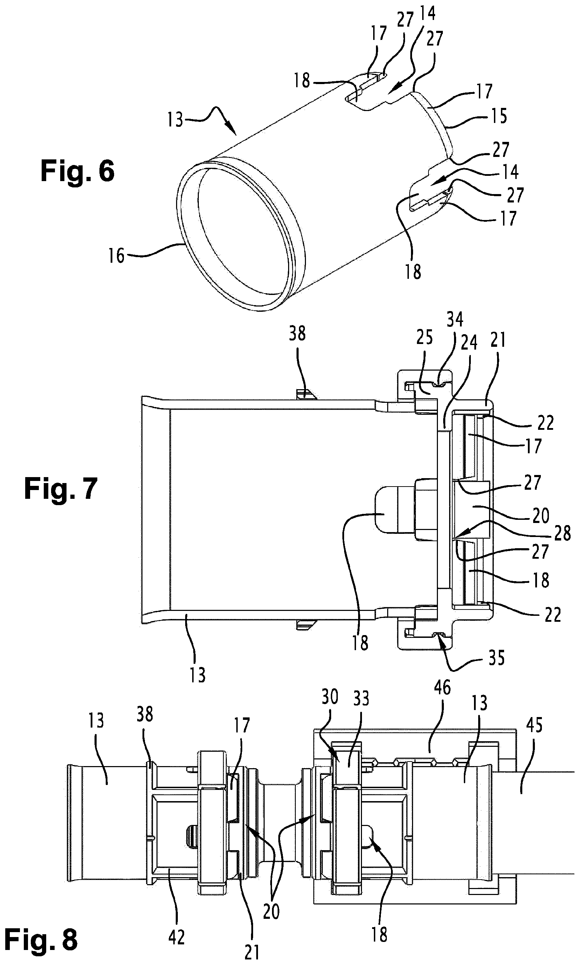

Comme montré plus particulièrement sur la figure 6, chaque douille de sertissage 13 comporte une pluralité d'encoches 14 débouchant sur un premier bord d'extrémité 15 de la douille de sertissage 13 destiné à être tourné vers le rebord d'appui 11 respectif. Chaque douille de sertissage 13 comporte également un deuxième bord d'extrémité 16 qui est opposé au premier bord d'extrémité 15 respectif, et qui est légèrement évasé de façon à faciliter l'introduction de la portion d'extrémité du tube respectif entre la douille de sertissage 13 et l'embout de raccordement 4 respectif.

Chaque douille de sertissage 13 comporte également une pluralité de portions d'assemblage 17 délimitées par les encoches 14, et s'étendant sensiblement parallèlement à l'axe de la douille de sertissage 13. Chaque douille de sertissage 13 comporte de plus une pluralité de fenêtres de visualisation 18 destinées à permettre, en conditions d'utilisation, la visualisation du bon positionnement du tube respectif. Selon le mode de réalisation représenté sur les figures, chaque fenêtre de visualisation 18 est ménagée dans le prolongement d'une encoche 14 respective. Il convient d'être noté que chaque fenêtre de visualisation 18 pourrait être formée par l'encoche 14 respective.

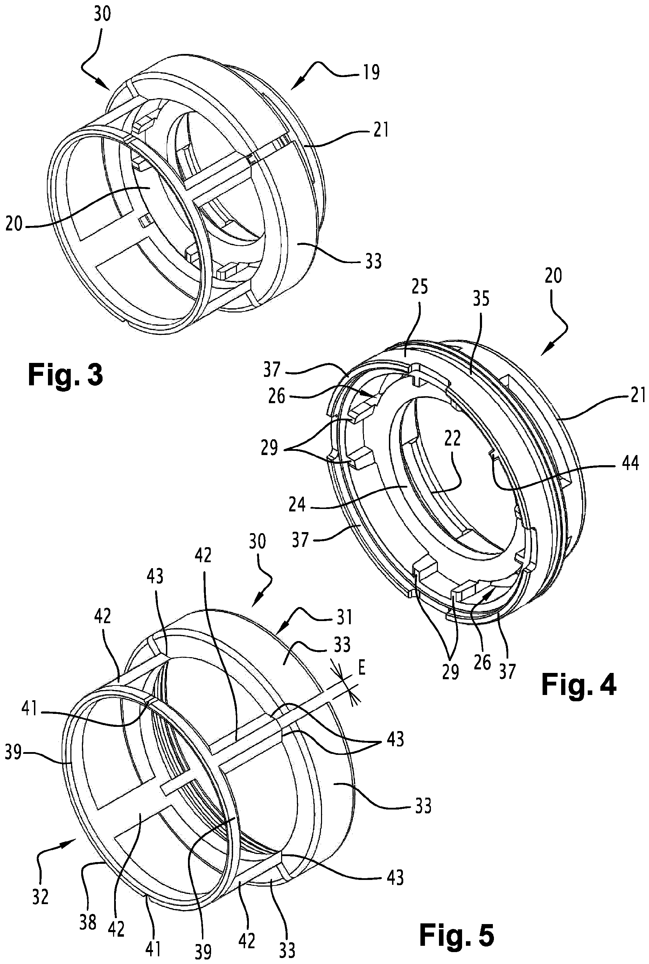

Le raccord à sertir 2 comporte en outre deux dispositifs de visualisation de sertissage 19 configurés pour visualiser un sertissage du raccord à sertir 2, et plus précisément de chaque douille de sertissage 13. Un dispositif de visualisation 19 est plus particulièrement représenté sur la figure 3.

Chaque dispositif de visualisation 19 comprend une bague de fixation 20 comportant une partie de fixation 21 destinée à être fixée sur le corps de raccord 2 à proximité d'un rebord d'appui 11 respectif. Selon le mode de réalisation représenté sur les figures, la partie de fixation 21 est annulaire, et comporte une pluralité de nervures d'encliquetage 22 réparties sur la circonférence intérieure de la partie de fixation 21. Les nervures d'encliquetage 22 de chaque partie de fixation 21 sont configurées pour coopérer avec une rainure d'encliquetage annulaire 23 respective ménagée sur la surface extérieure du corps de raccord 3.

Chaque bague de fixation 20 comporte par ailleurs une partie d'isolation galvanique annulaire 24 destinée à prendre appui contre la surface d'appui 12 du rebord d'appui 11 respectif, et pour être interposée entre la portion d'extrémité du tube respectif et le rebord d'appui 11 respectif. La partie d'isolation galvanique annulaire 24 de chaque bague de fixation 20 permet ainsi d'assurer une isolation galvanique entre une couche métallique à l'extrémité du tube respectif et la surface d'appui 12 respective.

Chaque bague de fixation 20 comporte de plus une partie d'assemblage annulaire 25 sur laquelle est destinée à être assemblée la douille de sertissage 13 respective. La partie d'assemblage 25 comporte plus particulièrement une pluralité d'ouvertures d'assemblage 26 réparties circonférentiellement autour de l'axe de la bague de fixation 20 et à travers chacune desquelles est destinée à s'étendre une portion d'assemblage 17 respective prévue sur la douille de sertissage 13 respective. Selon le mode de réalisation représenté sur les figures, chaque ouverture d'assemblage 26 est en arc de cercle.

Afin d'empêcher un retrait des portions d'assemblage 17 hors des ouvertures d'assemblage 26, et donc un désassemblage de la douille de sertissage 13 et de la bague de fixation 20, chaque portion d'assemblage 17 comporte deux éléments de retenue 27 latéraux configurés pour coopérer avec deux surfaces de butée 28 prévues sur la partie d'assemblage 25 de part et d'autre de l'ouverture d'assemblage 26 respective.

La partie d'assemblage 25 de chaque bague de fixation 20 comporte avantageusement des portions de guidage 29 configurées pour coopérer avec et guider latéralement les portions d'assemblage 17 de la douille de sertissage respective 13 lors de l'assemblage de la douille de sertissage 13 sur la bague de fixation 20.

Selon un mode de réalisation de l'invention, chaque bague de fixation 20 est élastiquement déformable, et peut par exemple être réalisée en polypropylène copolymère.

Chaque dispositif de visualisation 19 comprend en outre une bague de visualisation de sertissage 30 sécable. Chaque bague de visualisation 30 est destinée à s'étendre autour de la douille de sertissage 13 respective, et à être détruite lors du sertissage du raccord à sertir 2.

Chaque bague de visualisation 30 comprend une partie de montage 31 configurée pour être montée sur la bague de fixation 20 respective, et une partie de retenue 32 destinée à être montée autour de la douille de sertissage 13 respective.

La partie de montage 31 de chaque bague de visualisation 30 comporte une pluralité de segments de montage 33 s'étendant successivement et circonférentiellement autour de l'axe de la bague de visualisation 30, de telle sorte qu'un écart angulaire E est ménagé entre chaque paire de segments de montage 33 adjacents. Selon le mode de réalisation représenté sur les figures, chaque partie de montage 31 comporte quatre segments de montage 33.

Chaque segment de montage 33 présente une forme générale en arc de cercle, et est configuré pour être monté sur la partie d'assemblage 25 de la bague de fixation 20 respective. Selon le mode de réalisation représenté sur les figures, chaque segment de montage 33 comporte, sur sa surface intérieure, une nervure d'encliquetage 34 configurée pour coopérer avec une rainure d'encliquetage annulaire 35 prévue sur la surface extérieure de la partie d'assemblage 25 respective. Chaque segment de montage 33 comporte également un logement de réception 36 configuré pour recevoir une nervure d'insertion 37 prévue sur la partie d'assemblage 25 respective et orientée à l'opposé de la partie de fixation 21.

La partie de retenue 32 de chaque bague de visualisation 30 comporte un anneau de retenue 38 destiné à être monté autour de la douille de sertissage 13 respective. Selon le mode de réalisation représenté sur les figures, l'anneau de retenue 38 comporte deux segments de retenue 39 de forme générale en arc de cercle et reliés par des ponts de matière 41. Selon le mode de réalisation représenté sur les figures, la partie de montage 31 présente un diamètre extérieur supérieur au diamètre extérieur de l'anneau de retenue 38.

La partie de retenue 32 de chaque bague de visualisation 30 comporte en outre une pluralité d'éléments de liaison 42 décalés angulairement les uns des autres, et s'étendant sensiblement parallèlement à l'axe de la bague de visualisation 30. Selon le mode de réalisation représenté sur les figures, chaque partie de retenue 32 comporte quatre éléments de liaison 42.

Chaque élément de liaison 42 comprend une première portion d'extrémité reliée à l'anneau de retenue 38, et une deuxième portion d'extrémité reliée à deux extrémités adjacentes de deux segments de montage adjacents 33 respectivement par deux ponts de matière ruptibles 43. Ainsi, chaque segment de montage 33 est relié à la partie de retenue 32 respective par deux ponts de matière 43 situés respectivement aux deux extrémités du segment de montage 33, et chaque élément de liaison 42 s'étend sensiblement en regard d'un écart angulaire E entre deux segments de montage 33 adjacents.

Avantageusement, chaque bague de fixation 21 comporte un élément d'indexation angulaire 44 configuré pour coopérer avec la bague de visualisation 30 respective de manière à définir au moins une position de montage de la bague de visualisation 30 sur la bague de fixation 20.

Selon un mode de réalisation de l'invention, chaque bague de visualisation 30 est semi-rigide, et peut par exemple être réalisée en polypropylène chargé, par exemple chargé d'une charge minérale.

Un procédé d'assemblage du raccord à sertir 2 comporte notamment les étapes suivantes consistant à :
- fixer la partie de montage 31 de chaque bague de visualisation 30 sur la partie d'assemblage 25 de la bague de fixation 20 respective en insérant les nervures d'insertion 37 prévues sur la partie d'assemblage 25 dans les logements de réception 36 prévus sur les segments de montage 33, et en faisant coopérer les nervures d'encliquetage 34 prévues sur les segments de montage 33 avec la rainure d'encliquetage 35 prévue sur la partie d'assemblage 25,
- fixer chaque douille de sertissage 13 sur la partie d'assemblage 25 de la bague de fixation 20 respective en faisant coulisser la douille de sertissage 13 à l'intérieur de l'anneau de retenue 38 et en introduisant les portions d'assemblage 17 de la douille de sertissage 13 à travers les ouvertures d'assemblage 26 prévues sur la bague de fixation 20, et
- fixer la partie de fixation 21 de chaque bague de fixation 20 sur le corps de raccord 3 en introduisant l'embout de raccordement 4 respectif à l'intérieur de la douille de sertissage 13 fixée sur la bague de fixation 20, et en faisant coopérer les nervures d'encliquetage 22 prévues sur la partie de fixation 21 avec la rainure d'encliquetage annulaire 23 ménagée sur le corps de raccord 3.

Un procédé de sertissage du raccord à sertir 2 comporte notamment les étapes suivantes consistant à :
- introduire un embout de raccordement 4 à l'intérieur d'un tube 45 jusqu'à ce que l'extrémité du tube 45 tournée vers le raccord à sertir 2 vienne en butée contre la partie d'isolation galvanique annulaire 24 respective, le bon enfoncement du tube 45 sur l'embout de raccordement 4 étant visualisé à l'aide des fenêtres de visualisation 18,
- disposer des mâchoires de sertissage 46 autour de la bague de visualisation 30 s'étendant autour de l'embout de raccordement 4 (voir la figure 8), les segments de montage 33 étant configurés pour assurer un bon positionnement des mâchoires de sertissage 46 par rapport au raccord à sertir 2,
- sertir la douille de sertissage 13 autour du tube 45 à l'aide des mâchoires de sertissage 46, et
- réitérer les étapes précédentes pour l'autre embout de raccordement 4.

Chaque étape de sertissage entraîne une rupture des ponts de matière 41, 43 de la bague de visualisation 30 respective. Une telle rupture des différents ponts de matière 41, 43 d'une bague de visualisation 30 induit une destruction de la partie de retenue 32 de cette dernière et donc une séparation aisée, par exemple par gravité, de la partie de retenue 32 de la douille de sertissage 13 respective. La destruction de la partie de retenue 32 permet ensuite une séparation des différents segments de montage 33 de la bague de fixation 20 respective.

Le dispositif de visualisation 19 selon l'invention permet ainsi d'assurer une fixation aisée d'une douille de sertissage 13 sur le corps de raccord 3 par l'intermédiaire de la bague de fixation 20, tout en assurant une visualisation aisée et fiable du sertissage du raccord à sertir 2.

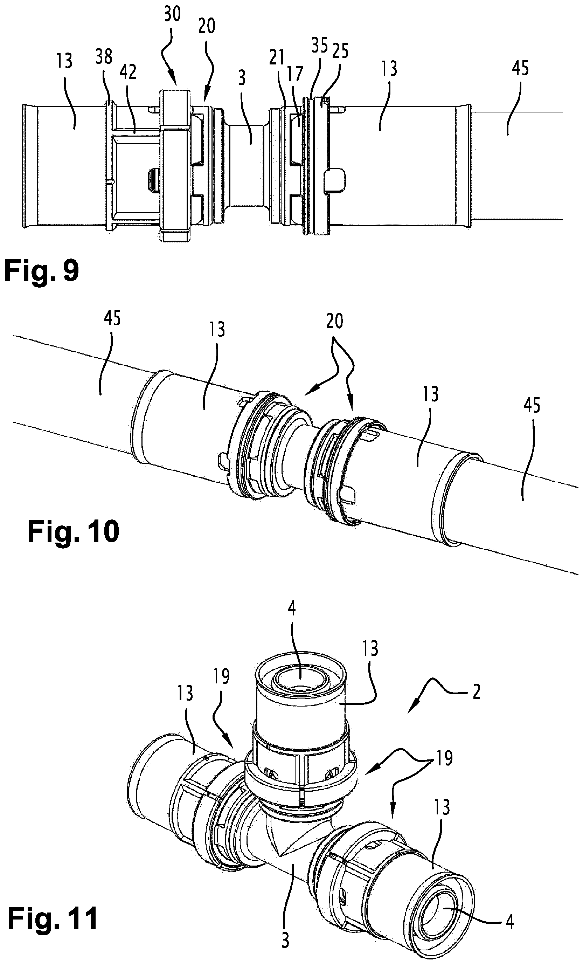

La figure 11 représente un raccord à sertir 2 selon un deuxième mode de réalisation de l'invention qui diffère de celui représenté sur les figures 1 à 10 essentiellement en ce que le raccord à sertir 2 est en T, et donc en ce qu'il comporte trois embouts de raccordement 4, trois douilles de sertissage 13 et trois dispositifs de visualisation 19.

Comme il va de soi, l'invention ne se limite pas aux seules formes d'exécution de ce raccord à sertir 2 et de ce dispositif de visualisation 19, décrites ci-dessus à titre d'exemples.

## Revendications

1. Dispositif de visualisation de sertissage (19) pour un raccord à sertir (2) pour tubes, comprenant :
- une bague de fixation (20) comportant une partie de fixation (21) destinée à être fixée sur un corps de raccord (3), et une partie d'assemblage (25) sur laquelle est destinée à être assemblée une douille de sertissage (13), et
- une bague de visualisation (30) sécable et destinée à s'étendre autour de la douille de sertissage (13), la bague de visualisation (30) comprenant une partie de montage (31) comportant au moins un segment de montage (33) configuré pour être monté sur la bague de fixation (20),
**caractérisé en ce que** la bague de visualisation (30) comporte une partie de retenue (32) destinée à être montée autour de la douille de sertissage (13), la partie de retenue (32) comportant un anneau de retenue (38) destinée à être montée autour de la douille de sertissage (13), et au moins un élément de liaison (42) comprenant une première portion d'extrémité reliée à l'anneau de retenue (38) et une deuxième portion d'extrémité reliée à l'au moins un segment de montage (33) par au moins un pont de matière ruptible (43).

2. Dispositif de visualisation de sertissage (19) selon la revendication 1, dans lequel l'anneau de retenue (38) comporte au moins deux segments de retenue (39) reliés par des ponts de matière ruptibles (41).

3. Dispositif de visualisation de sertissage (19) selon la revendication 1 ou 2, dans lequel l'au moins un segment de montage (33) présente une forme générale en arc de cercle.

4. Dispositif de visualisation de sertissage (19) selon l'une quelconque des revendications 1 à 3, dans lequel l'au moins un segment de montage (33) comporte un logement de réception (36) configuré pour recevoir une portion d'insertion (37) prévue sur la bague de fixation (20).

5. Dispositif de visualisation de sertissage (19) selon l'une quelconque des revendications 1 à 4, dans lequel la partie de montage (31) comporte une pluralité de segments de montage (33) s'étendant successivement et circonférentiellement autour de l'axe de la bague de visualisation (30), de telle sorte qu'un écart angulaire (E) est ménagé entre chaque paire de segments de montage adjacents.

6. Dispositif de visualisation de sertissage (19) selon l'une quelconque des revendications 1 à 5, dans lequel la bague de fixation (20) comporte un élément d'indexation angulaire (44) configuré pour coopérer avec la bague de visualisation (30) de manière à définir au moins une position de montage de la bague de visualisation (30) sur la bague de fixation (20).

7. Dispositif de visualisation de sertissage (19) selon l'une quelconque des revendications 1 à 6, dans lequel la bague de fixation (20) comporte une partie d'isolation galvanique annulaire (24) destinée à prendre appui contre une surface d'appui (12) du corps de raccord (3).

8. Dispositif de visualisation de sertissage (19) selon l'une quelconque des revendications 1 à 7, dans lequel la partie d'assemblage (25) comporte une pluralité d'ouvertures d'assemblage (26) à travers chacune desquelles est destinée à s'étendre une portion d'assemblage (17) respective prévue sur la douille de sertissage (13).

9. Dispositif de visualisation de sertissage (19) selon la revendication 8, dans lequel la partie d'assemblage (25) comporte une pluralité de surfaces de butée (28) configurées pour empêcher, en conditions d'utilisation, un retrait des portions d'assemblage (17) prévues sur la douille de sertissage (13) hors des ouvertures d'assemblage (26).

10. Dispositif de visualisation de sertissage (19) selon l'une quelconque des revendications 1 à 9, dans lequel la bague de fixation (20) et la bague de visualisation (30) sont de couleurs différentes.

11. Raccord à sertir (2) pour tubes, comportant :
- un corps de raccord (3) comportant au moins un embout de raccordement (4) destiné à être logé à l'intérieur d'un tube (45),
- une douille de sertissage (13) destinée à s'étendre autour du tube (45), et
- un dispositif de visualisation de sertissage (19) selon l'une quelconque des revendications 1 à 10.

12. Raccord à sertir (2) selon la revendication 11, dans lequel la douille de sertissage (13) comporte au moins une fenêtre de visualisation de tube (18).

## Patentansprüche

1. Vorrichtung zum Anzeigen eines Crimpverfahrens (19) für einen zu crimpenden Anschluss (2) für Rohre, umfassend:
- einen Befestigungsring (20), der einen Befestigungsteil (21), der dazu bestimmt ist, auf einem Anschlusskörper (3) befestigt zu werden, und einen Fügeteil (25) aufweist, auf dem eine Crimphülse (13) dazu bestimmt ist, gefügt zu werden, und
- einen Anzeigering (30), der teilbar und dazu bestimmt ist, sich um die Crimphülse (13) zu erstrecken, wobei der Anzeigering (30) einen Montageteil (31) umfasst, der mindestens ein Montagesegment (33) aufweist, das ausgestaltet ist, auf dem Befestigungsring (20) montiert zu werden,
**dadurch gekennzeichnet, dass** der Anzeigering (30) einen Halteteil (32) aufweist, der dazu bestimmt ist, um die Crimphülse (13) montiert zu werden, wobei der Halteteil (32) einen Haltering (38) aufweist, der dazu bestimmt ist, um die Crimphülse (13) montiert zu werden, und mindestens ein Verbindungselement (42), das einen ersten Endabschnitt, der mit dem Haltering (38) verbunden ist, und einen zweiten Endabschnitt umfasst, der mit dem mindestens einen Montagesegment (33) über mindestens eine durchstoßbare Materialbrücke (43) verbunden ist.

2. Vorrichtung zur Anzeige eines Crimpverfahrens (19) nach Anspruch 1, wobei der Haltering (38) mindestens zwei Haltesegmente (39) aufweist, die über durchstoßbare Materialbrücken (41) verbunden sind.

3. Vorrichtung zur Anzeige eines Crimpverfahrens (19) nach Anspruch 1 oder 2, wobei das mindestens eine Montagesegment (33) eine allgemeine Kreisbogenform darstellt.

4. Vorrichtung zur Anzeige eines Crimpverfahrens (19) nach einem der Ansprüche 1 bis 3, wobei das mindestens eine Montagesegment (33) einen Aufnahmeraum (36) aufweist, der ausgestaltet ist, einen Einsetzabschnitt (37) aufzunehmen, der auf dem Befestigungsring (20) vorgesehen ist.

5. Vorrichtung zur Anzeige eines Crimpverfahrens (19) nach einem der Ansprüche 1 bis 4, wobei der Montageteil (31) eine Vielzahl von Montagesegmenten (33) aufweist, die sich aufeinanderfolgend und umlaufend um die Achse des Anzeigerings (30) derart erstrecken, dass ein Winkelabstand (E) zwischen jedem Paar von benachbarten Montagesegmenten eingerichtet ist.

6. Vorrichtung zur Anzeige eines Crimpverfahrens (19) nach einem der Ansprüche 1 bis 5, wobei der Befestigungsring (20) ein Element zur Windelindexierung (44) aufweist, das ausgestaltet ist, mit dem Anzeigering (30) so zusammenzuwirken, dass mindestens eine Montageposition des Anzeigerings (30) auf dem Befestigungsring (20) definiert wird.

7. Vorrichtung zur Anzeige eines Crimpverfahrens (19) nach einem der Ansprüche 1 bis 6, wobei der Befestigungsring (20) einen ringförmigen Teil zur galvanischen Trennung (24) aufweist, der dazu bestimmt ist, gegen eine Auflagefläche (12) des Anschlusskörpers (3) zu drücken.

8. Vorrichtung zur Anzeige eines Crimpverfahrens (19) nach einem der Ansprüche 1 bis 7, wobei der Fügeteil (25) eine Vielzahl von Fügeöffnungen (26) aufweist, durch welche jeweils ein jeweiliger Fügeabschnitt (17), der auf der Crimphülse (13) vorgesehen ist, dazu bestimmt ist, sich zu erstrecken.

9. Vorrichtung zur Anzeige eines Crimpverfahrens (19) nach Anspruch 8, wobei der Fügeteil (25) eine Vielzahl von Anschlagflächen (28) aufweist, die ausgestaltet sind, bei Gebrauchsbedingungen einen Rückzug der Fügeabschnitte (17), die auf der Crimphülse (13) vorgesehen sind, aus den Fügeöffnungen (26) zu verhindern.

10. Vorrichtung zur Anzeige eines Crimpverfahrens (19) nach einem der Ansprüche 1 bis 9, wobei der Befestigungsring (20) und der Anzeigering (30) unterschiedliche Farben haben.

11. Zu crimpender Anschluss (2) für Rohre, aufweisend:
- einen Anschlusskörper (3), der mindestens einen Anschlussstutzen (4) aufweist, der dazu bestimmt ist, in einem Rohr (45) untergebracht zu werden,
- eine Crimphülse (13), die dazu bestimmt ist, sich um das Rohr (45) zu erstrecken, und
- eine Vorrichtung zur Anzeige eines Crimpverfahrens (19) nach einem der Ansprüche 1 bis 10.

12. Zu crimpender Anschluss (2) nach Anspruch 11, wobei die Crimphülse (13) mindestens ein Fenster zur Anzeige eines Rohrs (18) aufweist.

## Claims

1. A crimping visualization device (19) for a crimp connector (2) for tubes, comprising:
- a fastening ring (20) including a fastening portion (21) intended to be fastened on a connector body (3), and an assembly portion (25) on which a crimping sleeve (13) is intended to be assembled, and
- a visualization ring (30) breakable and intended to extend around the crimping sleeve (13), the visualization ring (30) comprising a mounting portion (31) includes at least one mounting segment (33) configured to be mounted on the fastening ring (20),
**characterized in that** the visualization ring (30) includes a retaining portion (32) intended to be mounted around the crimping sleeve (13), the retaining portion (32) including a retaining ring (38) intended to be mounted around the crimping sleeve (13), and at least one connecting element (42) comprising a first end portion connected to the retaining ring (38) and a second end portion connected to the at least one mounting segment (33) by at least one breakable bridge of material (43).

2. The crimping visualization device (19) according to claim 1, wherein the retaining ring (38) includes at least two retaining segments (39) connected by breakable bridges of material (41).

3. The crimping visualization device (19) according to claim 1 or 2, wherein the at least one mounting segment (33) presents a general shape of a circular arc.

4. The crimping visualization device (19) according to any one of claims 1 to 3, wherein the at least one mounting segment (33) includes an receiving housing (36) configured to receive an insertion portion (37) provided on the fastening ring (20).

5. The crimping visualization device (19) according to any one of claims 1 to 4, wherein the mounting portion (31) includes a plurality of mounting segments (33) extending successively and circumferentially about the axis of the visualization ring (30), so that an angular shift (E) is formed between each pair of adjacent mounting segments.

6. The crimping visualization device (19) according to any one of claims 1 to 5, wherein the fastening ring (20) includes an angular indexing element (44) configured to cooperate with the visualization ring (30) so as to define at least one mounting position of the visualization ring (30) on the fastening ring (20).

7. The crimping visualization device (19) according to any one of claims 1 to 6, wherein the fastening ring (20) includes an annular galvanic isolation portion (24) intended to bear against a bearing surface (12) of the connector body (3).

8. The crimping visualization device (19) according to any one of claims 1 to 7, wherein the assembly portion (25) includes a plurality of assembly openings (26) through each of which a respective assembly portion (17) provided on the crimping sleeve (13) is intended to extend.

9. The crimping visualization device (19) according to claim 8, wherein the assembly portion (25) includes a plurality of abutment surfaces (28) configured to prevent, in use, a removal of the assembly portions (17) provided on the crimping sleeve (13) out of the mounting openings (26).

10. The crimping visualization device (19) according to any one of claims 1 to 9, wherein the fastening ring (20) and the visualization ring (30) are of different colors.

11. A crimp connector (2) for tubes, including:
- a connector body (3) including at least one connection endpiece (4) intended to fit inside a tube (45),
- a crimping sleeve (13) intended to extend around the tube (45), and
- a crimping visualization device (19) according to any one of claims 1 to 10.

12. The crimp connector (2) according to claim 11, wherein the crimping sleeve (13) includes at least one tube visualization window (18).
